# EUROPEAN PATENT SPECIFICATION

(11) **EP 0 849 103 B1**
(45) Date of publication and mention of the grant of the patent: **18.01.2006**
(21) Application number: 97122490.2
(22) Date of filing: 19.12.1997
(51) Int. Cl.: B60G 3/20

(54) **Rear suspension for a motor vehicle having independent wheel suspension**
Hinterradaufhängung für ein Kraftfahrzeug mit unabhängiger Radaufhängung
Suspension arrière pour un véhicule automobile à suspension de roue indépendante

(30) Priority: 20.12.1996 IT TO961064
(43) Date of publication of application: 24.06.1998
(73) Proprietor: FIAT AUTO S.p.A., 10135 Torino (IT)
(72) Inventor: Alesso, Guido, 12038 Savigliano (Cuneo) (IT); Spina, Michele, 10136 Torino (IT)
(74) Representative: Quinterno, Giuseppe

(56) References cited:
- EP-A- 0 306 625
- EP-A- 0 323 815
- DE-A- 4 224 484
- US-A- 4 591 184
- US-A- 4 828 279
- US-A- 5 102 159
- PATENT ABSTRACTS OF JAPAN vol. 017, no. 358 (M-1440), 7 July 1993 (1993-07-07) & JP 05 050817 A (NISSAN MOTOR CO LTD), 2 March 1993 (1993-03-02)
- PATENT ABSTRACTS OF JAPAN vol. 095, no. 005, 30 June 1995 (1995-06-30) & JP 07 047824 A (NISSAN MOTOR CO LTD), 21 February 1995 (1995-02-21)
- PATENT ABSTRACTS OF JAPAN vol. 013, no. 214 (M-827), 18 May 1989 (1989-05-18) & JP 01 032913 A (MAZDA MOTOR CORP), 2 February 1989 (1989-02-02)
- PATENT ABSTRACTS OF JAPAN vol. 009, no. 215 (M-409), 3 September 1985 (1985-09-03) & JP 60 076408 A (MAZDA KK), 30 April 1985 (1985-04-30)
- "L'AMORTISSEUR, ELEMENT CLE DE LA FONCTION SUSPENSION" REVUE TECHNIQUE AUTOMOBILE, vol. 51, no. 584, 1 May 1996 (1996-05-01), pages XLVI-XLIX, XP000599795
- PATENT ABSTRACTS OF JAPAN vol. 096, no. 012, 26 December 1996 (1996-12-26) & JP 08 197921 A (TOYOTA MOTOR CORP)

## Description

The present invention concerns a rear suspension for a motor vehicle of the type having independent wheel suspension, in which the support of each wheel is connected to the body of the motor vehicle by an articulated quadrilateral system.

More specifically, the subject of the invention is a rear suspension of the type defined in the preamble of the appended Claim 1.

PATENT ABSTRACTS OF JAPAN vol. 095, No. 005, 30 June 1995 (1995-06-30) and JP 07 047 824 A (NISSAN MOTOR CO. LTD.), 21 February 1995 (1995-02-21) disclose a rear suspension of that kind, in which a connecting rod is articulated to the lower transverse member in a location situated forwardly with respect to the axis of the wheel. Said connecting rod is furthermore articulated to a specific arm projection of the wheel support member, different from the arm projection to which the upper transverse member is articulated.

Another similar rear suspension is disclosed in US-A-5 102 159. In this suspension a connecting rod is connected to an intermediate portion of an upwardly extending arm of the wheel support, whereas the upper transverse member of the suspension is articulated (by a ball joint) to the upper end of said arm. Said connecting rod is also articulated to an intermediate portion of a first limb of the lower transverse structure of the suspension, in a location situated forwardly with respect to the axis of the wheel. Said first limb is not articulated directly to the wheel support, but rather to an intermediate portion of a second limb which extends transversely between the wheel support and the vehicle body. In this prior suspension ball joints are extensively used.

The object of the present invention is to provide an improved suspension, particularly adapted to allow better control of the wheels toe-in.

This and other objects are achieved by a rear suspension according to the invention having the characteristics defined in Claim 1.

Further characteristics and advantages of the invention will become clearer from the following detailed description, given purely by way of non-limitative example and with reference to the accompanying drawings, in which:
Figure 1 is a perspective view of a suspension according to the invention;
Figure 2 is another perspective view of the suspension shown in figure 1; and

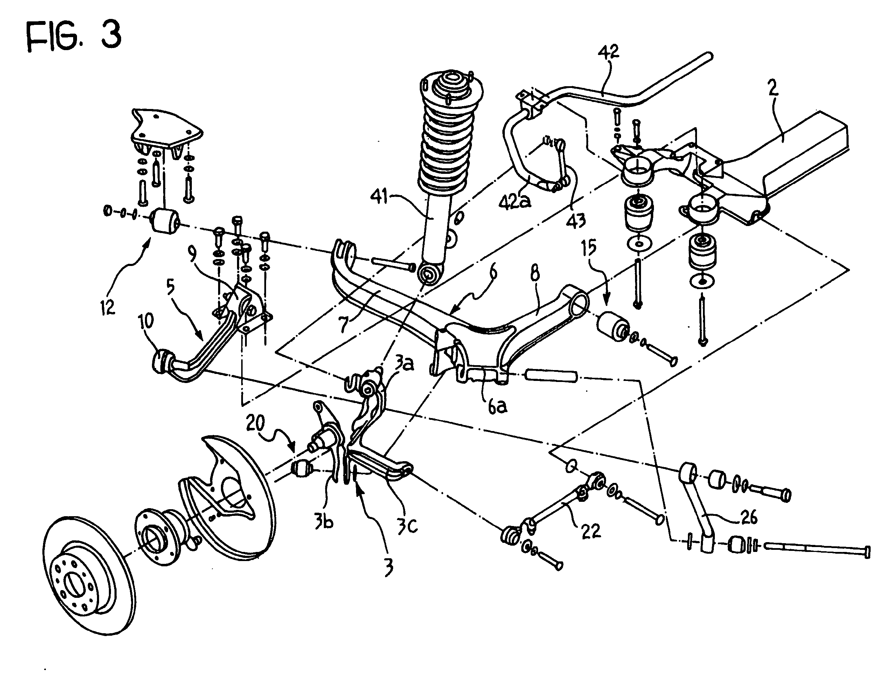

Figure 3 is an exploded perspective view of the suspension shown in the preceding figures.

The drawings illustrate the part of the suspension associated with only the left rear wheel of the motor vehicle, the right part of the suspension being symmetrical to that illustrated.

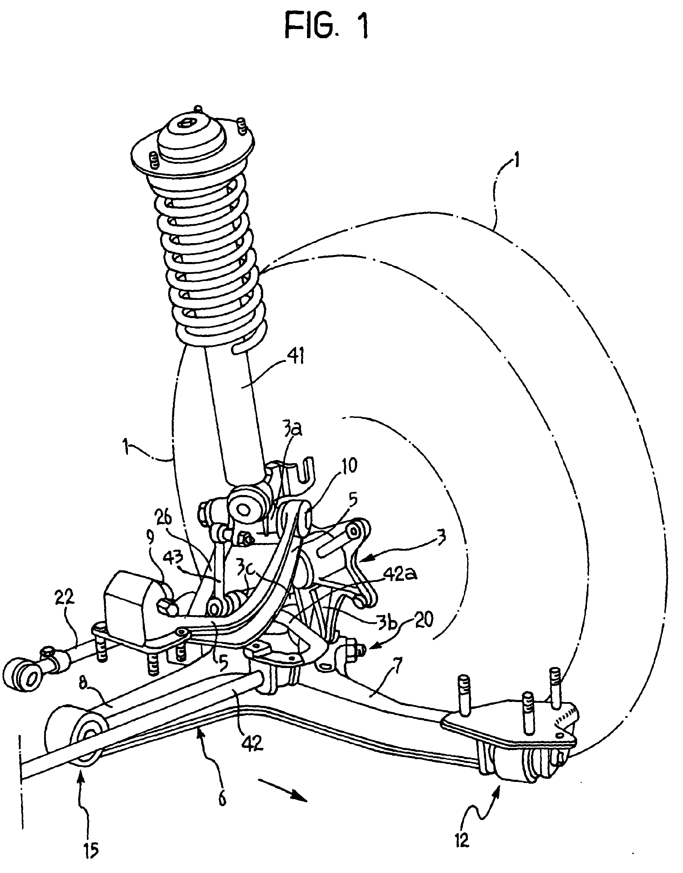

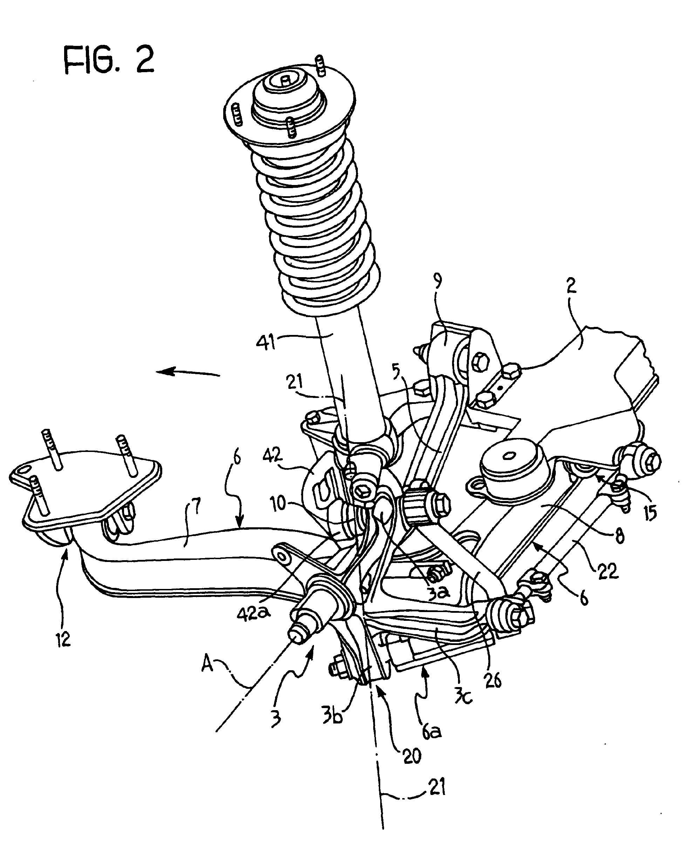

In Figure 1, reference numeral 1 indicates the left rear wheel of a motor vehicle the body of which is indicated 2 in Figure 2.

The wheel 1 is mounted on a support 3 which is connected to the motor vehicle body 2 by an articulated quadrilateral system. This system comprises an upper transverse member constituted by a single transverse arm 5, and a lower transverse member 6 constituted by a rigid triangular structure having a principal limb 7 and an auxiliary limb 8.

In conformity with the terminology generally adopted in this field, the term "transverse" is used in the present description and in the following claims to indicate a horizontal direction substantially inclined with respect to the longitudinal direction of the motor vehicle.

The upper transverse arm 5 has one end 9 articulated to the motor vehicle body 2 by a ball joint (see Figure 2 in particular), and another end articulated to an upper arm 3a of the wheel support 3 by another ball joint 10.

The end of the principal limb 7 of the triangular structure 6 is connected to the motor vehicle body 2 by a ball joint 12.

The auxiliary limb 8 of the triangular structure 6 is likewise articulated to the motor vehicle body 2 by a further ball joint 15.

The ball joints 12 and 15 define a pivot axis of the triangular structure 6. The triangular structure is also connected to a lower arm 3b of the wheel support 3 by a ball joint 20.

The two ball joints 10, 20 define a steering axis 21 of the wheel 1 (Figure 2).

Steering is controlled by a rod 22 connected by a ball joint to an arm 3c of the wheel support 3.

A connecting rod 26 has one end articulated by a ball joint to the upper arm 3a of the wheel support 3, and another end likewise articulated by a ball joint to the vertex portion 6a of the triangular structure 6.

In particular, it can be seen that the arm 3a of the wheel support 3 extends upwardly, and that the connecting rod 26, together with the upper transverse arm 5, are attached to the arm 3a at a point above the axis A of the wheel (Figure 2).

By virtue of this characteristic, the suspension enables a better control of the toe-in.

Reference numeral 41 in the drawings indicates a shock absorber the lower end of which is articulated to the end of the upper arm 3a of the wheel support 3. The upper end of the shock absorber 41 is connected to the motor vehicle body.

A torsion bar 42 has an end 42a articulated to one end of a connecting rod 43, the other end of which is articulated to the upper arm 3a of the wheel support 3.

The suspension described above functions in a similar way to the suspension known from the earlier European Patent No. 0 323 815, but exhibits improved characteristics, in particular, as regards the control of the toe-in.

Naturally, the principle of the invention remaining the same, the embodiments and the details of construction may be widely varied with respect of that described and illustrated purely by way of non-limitative example, without departing from the scope of the invention as defined in the accompanying claims.

## Claims

1. Rear suspension for motor vehicles of the type having independent wheel suspension, in which:
the support (3) of each wheel (1) is connected to the body (2) of the motor vehicle by an articulated quadrilateral system including an upper transverse member (5) and a lower transverse member (6);
the upper transverse member (5) is a transverse arm one end (9) of which is articulated to the motor vehicle body (2), and an opposite end of which is articulated to the wheel support (3) by a joint (10);
the lower transverse member is a triangular structure (6) having a principal limb (7) and an auxiliary limb (8); the said limbs (7,8) have ends articulated to the motor vehicle body (2) by joints (12,15); the said triangular structure (6) is also to the support (3) by means of a joint (20) which defines, together with the joint (10) of the upper transverse member (5), a steering axis (21) of the wheel (1);
the wheel support (3) has an arm (3c) to which is connected a track rod (22), and said wheel support (3) is further connected to the triangular structure (6) by a connecting rod (26), which is articulated to a portion (3a) of the wheel support (3) situated above the axis (A) of the wheel (1);
**characterised in that** said connecting rod (26) is articulated to said lower transverse member (6) in a location situated behind the axis (A) of the wheel (1), and is articulated to the wheel support (3) about the same axis as said upper transverse member (5) and said wheel support (3); said joints (10, 12, 15, 20) being ball joints.

2. Rear suspension according to Claim 1, including a shock absorber (41) connected to the wheel support (3), the suspension being **characterised in that** the said shock absorber (41) is connected to a portion (3a) of the wheel support (3) situated above the axis (A) of the wheel.

3. Rear suspension according to Claims 1 and 2, **characterised in that** the wheel support (3) includes an upwardly directed arm (3a) to which are articulated the upper transverse member (5), the connecting rod (26) and the lower end of the shock absorber (41).

4. Rear suspension according to any preceding claim, **characterised in that** the triangular structure (6) is rigid.

## Patentansprüche

1. Hinterradaufhängung für Kraftfahrzeuge, die eine Einzelradaufhängung besitzen, wobei:
die Halterung (3) eines jeden Rades (1) mit der Karosserie (2) des Kraftfahrzeugs über ein vierseitiges Gelenkssystem verbunden ist, das ein oberes Querelement (5) und ein unteres Querelement (6) aufweist;
das obere Querelement (5) aus einem Querarm besteht, von dem ein Ende (9) in der Karosserie (2) des Kraftfahrzeugs gelenkig gelagert ist und von dem das gegenüberliegende Ende in der Radhalterung (3) in einem Gelenk (10) gelenkig gelagert ist;
das untere Querelement aus einem dreieckigen Aufbau (6)
besteht, der einen Hauptschenkel (7) und einen Hilfsschenkel (8) besitzt; wobei die Schenkel (7, 8) Enden besitzen, die in der Karosserie (2) des Kraftfahrzeugs in Gelenken (12, 15) gelenkig gelagert sind; wobei der dreieckige Aufbau (6) weiters mit der Halterung (3) über ein Gelenk (20) verbunden ist, das zusammen mit dem Gelenk (10) des oberen Querelements (5) eine Steuerachse (21) des Rades (1) bildet;
die Radhalterung (3) einen Arm (3c) besitzt, mit dem eine Spurstange (22) verbunden ist, wobei die Radhalterung (3) weiters mit dem dreieckigen Aufbau (6) über eine Verbindungsstange (26) verbunden ist, die in einem Teil (3a) der Radhalterung (3) gelenkig gelagert ist, der oberhalb der Achse (A) des Rades (1) liegt;
**dadurch gekennzeichnet, dass** die Verbindungsstange (26) im unteren Querelement (6) an einer Stelle gelenkig gelagert ist, die hinter der Achse (A) des Rades (1) liegt, und in der Radhalterung (3) um die selbe Achse wie das obere Querelement (5) und die Radhalterung (3) gelenkig gelagert ist; wobei die Gelenke (10, 12., 15, 20) Kugelgelenke sind.

2. Hinterradaufhängung gemäß Anspruch 1, wobei die Hinterradaufhängung einen Stossdämpfer (41) aufweist, der mit der Radhalterung (3) verbunden ist, wobei die Aufhängung **dadurch gekennzeichnet ist, dass** der Stossdämpfer (41) mit einem Teil (3a) der Radhalterung (3) verbunden ist, der oberhalb der Achse (A) des Rades liegt.

3. Hinterradaufhängung gemäß Anspruch 1 und 2, **dadurch gekennzeichnet, dass** die Radhalterung (3) einen nach oben gerichteten Arm (3a) aufweist, in dem das obere Querelement (5), die Verbindungsstange (26) und das untere Ende des Stossdämpfers (41) gelenkig gelagert sind.

4. Hinterradaufhängung gemäß irgendeinem der bisherigen Ansprüche, **dadurch gekennzeichnet, dass** der dreieckige Aufbau (6) starr ist.

## Revendications

1. Suspension arrière pour des véhicules à moteur du type ayant une suspension de roue indépendante, dans laquelle :
le support (3) de chaque roue (1) est relié à la carrosserie (2) du véhicule à moteur par un système à quadrilatère articulé comprenant un élément transversal supérieur (5) et un élément transversal inférieur (6);
l'élément transversal supérieur (5) est un bras transversal dont une extrémité (9) est articulée sur la carrosserie de véhicule à moteur (2), et dont une extrémité opposée est articulée sur le support de roue (3) grâce à une articulation (10);
l'élément transversal inférieur est une structure triangulaire (6) ayant une branche principale (7) et une branche auxiliaire (8); lesdites branches (7, 8) ont des extrémités articulées sur la carrosserie de véhicule à moteur (2) grâce à des articulations (12, 15); ladite structure triangulaire (6) est également reliée au support (3) au moyen d'une articulation (20) qui définit, avec l'articulation (10) de l'élément transversal supérieur (5), un axe de braquage (21) de la roue (1);
le support de roue (3) a un bras (3c) auquel est reliée une barre d'accouplement (22), et ledit support de roue (3) est en outre relié à la structure triangulaire (6) par une biellette (26), qui est articulée sur une partie (3a) du support de roue (3) située au-dessus de l'axe (A) de la roue (1) ;
**caractérisée en ce que** ladite biellette (26) est articulée sur ledit élément transversal inférieur (6) dans un emplacement situé derrière l'axe (A) de la roue (1), et est articulée sur le support de roue (3) autour du même axe que ledit élément transversal supérieur (5) et ledit support de roue (3); lesdites articulations (10, 12, 15, 20) étant des rotules.

2. Suspension arrière selon la revendication 1, comprenant un amortisseur (41) relié au support de roue (3), la suspension étant **caractérisée en ce que** ledit amortisseur (41) est relié à une partie (3a) du support de roue (3) située au-dessus de l'axe (A) de la roue.

3. Suspension arrière selon les revendications 1 et 2, **caractérisée en ce que** le support de roue (3) comprend un bras orienté vers le haut (3a) sur lequel sont articulés l'élément transversal supérieur (5), la biellette (26) et l'extrémité inférieure de l'amortisseur (41).

4. Suspension arrière selon l'une quelconque des revendications précédentes, **caractérisée en ce que** la structure triangulaire (6) est rigide.
